**Europäisches Patentamt**

**European Patent Office**

**Office européen des brevets**

(19)

(11) Publication number: **0 175 193**
A2

(12) # EUROPEAN PATENT APPLICATION

(21) Application number: **85110974.4**

(22) Date of filing: **30.08.85**

(51) Int. Cl.⁴: **B 01 D 37/00,** B 01 D 29/30

(30) Priority: 13.09.84 JP 193500/84
13.09.84 JP 193501/84
02.11.84 JP 167181/84
02.11.84 JP 167182/84
08.01.85 JP 1315/85
08.01.85 JP 1316/85

(43) Date of publication of application: **26.03.86**
**Bulletin 86/13**

(84) Designated Contracting States: **AT BE CH DE FR GB IT**
**LI NL SE**

(71) Applicant: **TOYO DENKI KOGYOSHO CO., LTD., 7-10,**
**Norimatsu 1-chome, Yahatanishi-ku Kitakyushu-shi**
**Fukuoka-ken (JP)**

(72) Inventor: **Araoka, Toshinobu, 7-10, Norimatsu 1-chome**
**Yahatanishi-ku, Kitakyushu-shi Fukuoka-ken (JP)**
Inventor: **Suzuki, Shigeharu, 3-47-402,**
**Shinkitajima 5-chome Suminoe-ku, Osaka-shi Osaka-fu**
**(JP)**

(74) Representative: **Patentanwälte Müller-Boré, Deufel,**
**Schön, Hertel, Lewald, Otto, Isartorplatz 6,**
**D-8000 München 2 (DE)**

(54) **Device for processing fluid with solid bodies.**

(57) A device for processing fluid containing solid bodies is
provided which comprises a separation tank with a strainer arranged therein, a fluid discharging suction unit connected to
one side of the strainer, and a solid discharge mechanism con-
nected to the other side of the strainer, whereby fluid contain-
ing solid bodies such as sludge is processed effectively
through separation.

PATENTANWÄLTE
MÜLLER-BORÉ · DEUFEL · SCHÖN
HERTEL · LEWALD · OTTO
ISARTORPLATZ 6 - 8 MÜNCHEN 2
TEL. (089) 221483 - TX. 5-24285

DEVICE FOR PROCESSING FLUID WITH SOLID BODIES

## BACKGROUND OF THE INVENTION

This invention relates to a processing device for transferring fluid containing solid bodies and separating solid bodies from the fluids.

Hitherto, several types of processing devices for separating solid bodies from fluid are publicly known, one of which is designed so that a vacuum separation tank is connected to a vacuum generating unit such as a water seal type vacuum pump, the vacuum separation tank is communicated with liquid or gas mingled with solid bodies by means of a suction house, and a liquid component is discharged from the vacuum separation tank toward the vacuum generating unit.

In such processing devices as above, however, as liquid or gas containing solid bodies is sucked in, solid bodies etc. also are drawn into the pump, so that the pump tends to be damaged or worn.

In view of such disadvantages, the prior art used a strainer or like member in front of a suction port of the vacuum generating unit to eliminate solid bodies, but a suction power is subject to be decreased due to loading of the strainer, so that the system was shut down frequently. To overcome such drawbacks, the strainer is obliged to be cleaned frequently. This needs the processes of disassembling and cleaning, thus requires many hands and ample maintenance time, thereby results in a decrease of the efficiency of the object work.

## SUMMARY OF THE INVENTION

It is an object of the present invention to provide a processing device which discharges solid bodies picked up inside a strainer without need of disassembling of the device of unit and prevents loading of the strainer so that it can discharge solid bodies from the strainer automatically.

To achieve the foregoing object, a device for processing fluid containing solid bodies according to the present invention is improved in that a strainer is provided inside a separation tank, and one side of the strainer is connected to a fluid discharging suction unit with the other side connected to a solid discharging mechanism.

## BRIEF DESCRIPTION OF THE DRAWINGS

Fig. 1 is a sectional front view of a portion of a device for processing fluid containing solid bodies according to the first embodiment of the present invention;

Figs. 2 through 5 are sectional front views showing a portion each of modifications of the device shown in Fig. 1;

Fig. 6 is a sectional front view of a portion of the second embodiment;

Figs. 7 through 10 are explanation views of concrete examples of a simple open/close valve;

Fig. 11 is a sectional front view of a portion of the third embodiment;

Figs. 12 and 13 are plane views of the device shown in Fig. 11;

Figs. 14 through 16 are sectional front views showing a portion each of modifications of the device shown in Fig. 11;

Fig. 17 is a sectional front view of a portion of the fourth embodiment;

Figs. 18 through 21 are sectional front views of examples of the simple open/close valve;

Fig. 22 is a sectional front view of a portion of the fifth embodiment;

Figs. 23 through 27 are sectional front views showing a portion each of modifications of the device shown in Fig. 22;

Fig. 28 is a sectional front view of a portion of the sixth embodiment;

Figs. 29 and 30 are sectional front views showing a portion each of modifications of the device shown in Fig. 28; and

Figs. 31 and 32 are schematic front views of the seventh embodiment.

## DESCRIPTION OF THE PREFERRED EMBODIMENTS

Embodiments of the present invention to solve the problems of the prior art will now be described in detail with reference to the drawings.

(First embodiment)

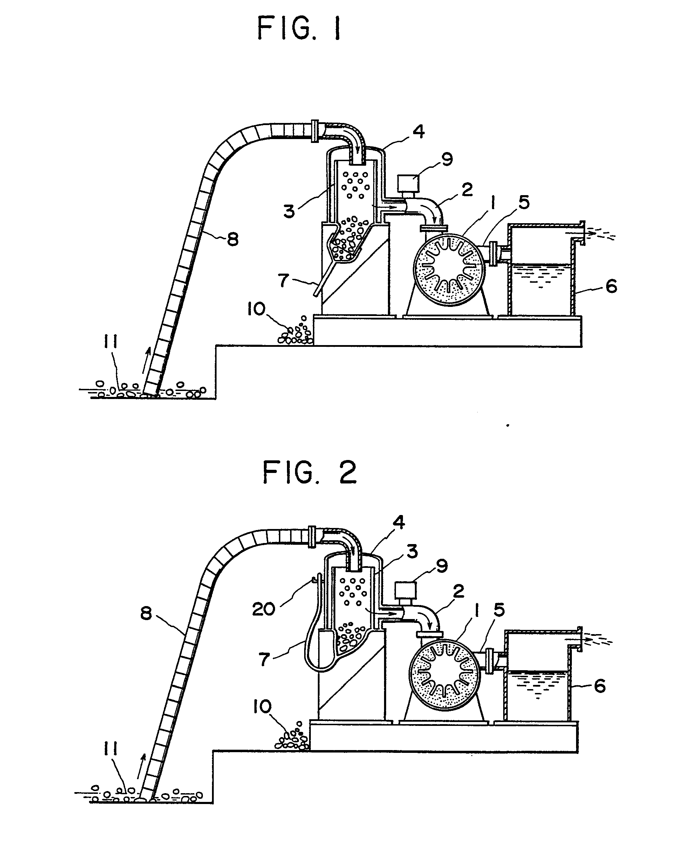

In Fig. 1, numerical 1 indicates a suction unit, which is a water seal type vacuum pump in this embodiment; but the present invention should not be limited to such pumps. It may be a blower, dry type vacuum pump, or ordinary pump. The suction unit 1 is communicated on one side through a suction pipe 2 with a section inside a separation tank 4, but outside a strainer 3 arranged in the tank. The other side of the suction unit 1 is connected through a discharge pipe 5 to a circulation water tank 6. Numerical 8 is a suction hose, one end of which is dipped in a substance 11 (to be sucked in) containing solid bodies 10 with the other end connected to the upper end of the strainer 3 arranged in the separation tank 4.

Describing the internal configuration of the separation tank 4, the strainer 3 has the lower end opened and is equipped with an open/close valve 7 for discharging outward solid bodies 10 accumulating inside the strainer 3. The open/close valve 7 may be designed so that it can open and close automatically in response to a variation of pressure inside the separation tank 4. In such a case, the valve 7 is closed when the internal pressure of the separation tank 4 is negative and on the other hand laid open when the pressure is identical to the atmospheric pressure.

Although several types of valves can be used as the open/close valve 7, this embodiment forms the valve 7 by a hose body itself, such as a vinyl hose being flexible and strong. When the internal pressure of the separation tank 4 is negative, the pressure difference between the atmospheric pressure overcomes the elasticity of the hose body to close its passage. When the internal pressure becomes identical to the atmospheric pressure, the hose body returns to its original shape to open its passage. That is, such a hose body is made flat and blocked when the separation tank 4 is under a negative pressure, whereas when the atmospheric pressure is restored the hose body assumes a circular cross section to open the passage thereby permitting discharging of solid bodies 10.

The open/close valve 7, however, should not be limited to the foregoing configuration. The valve 7 may be formed by an electromagnetic valve which is actuated by means of a detection signal given from a sensor for detecting a variation of the internal pressure of the separation tank 4.

The transfer and separation work performed by the processing device of the foregoing configuration will now be described. As the suction unit 1 is put in operation, the internal pressure of the separation tank 4 becomes negative, i.e. lower than the atmospheric pressure, and the open/close valve 7 attached to the bottom of the separation tank 4 is pressed by the atmospheric pressure existing on the outside thereof and made flat, so that the passage is blocked. As a result, the separation tank 4 is evacuated and the substance 11 containing solid bodies 10 is sucked into the separation tank 4 through the suction hose 8. Because the strainer 3 is provided in the separation tank 4, the solid bodies 10 remain within the separation tank 4, whereas liquid or gas presses through thru-holes of the strainer 3 and is discharged outward from the suction unit 1 through the discharge pipe 5 and circulation water tank 6 connected to the unit 1.

On the other hand, an air intake valve 9 (such as an electromagnetic valve or hand-operated valve) of sufficient size is attached to the suction pipe 2 or separation tank 4. By introducing the air into the separation tank 4 by means of the above valve or stopping the operation of the suction unit 1, the internal pressure of the separation tank 4 is made identical to the atmospheric pressure. As a result, the solid bodies 10 remaining within the separation tank 4 push and open the open/close valve 7 made of the hose body and are automatically discharged outside the separation tank 1. Through repetition of the foregoing operation the inside of the strainer 3 is cleaned and the solid bodies 10 etc. are collected automatically.

0175193

The circulation water tank 6 is provided in order to effect continuous running of the pump because water is not supplemented by any means.

Fig. 2 shows a modification of the processing device shown in Fig. 1. The device shown in Fig. 2 does not permit discharge of the solid bodies even if the open/close valve 7 is opened, except when the open/close valve 7 is taken off from a hose hook 20.

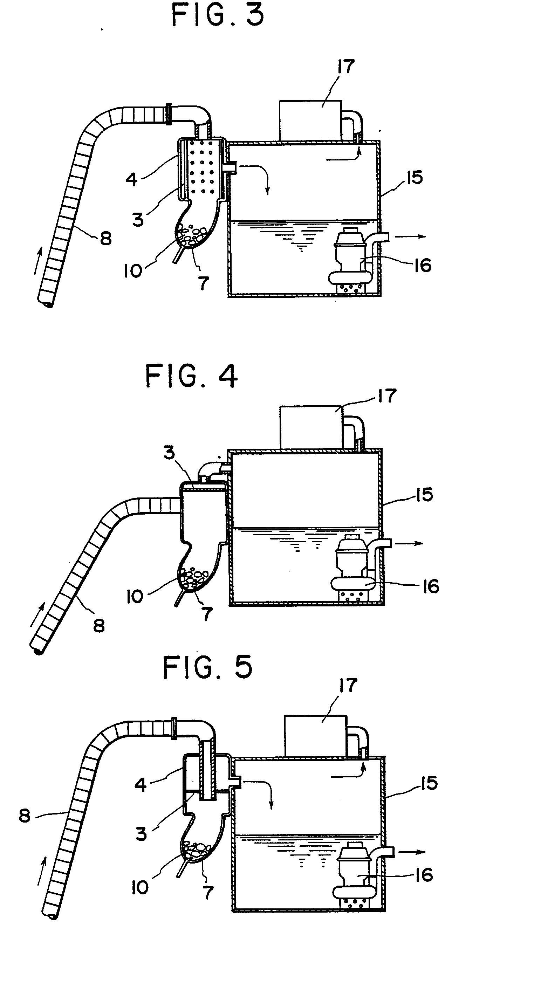

Figs. 3 through 5 show modifications wherein the separation tank 4 is attached to a liquid storage tank 15. More clearly, the device shown in Fig. 3 is characterized in that the separation tank 4 of the foregoing configuration is provided on a side wall of the liquid storage tank 15, inside the liquid storage tank 15 a discharge pump 16 is provided to discharge liquid, and above the liquid storage tank 15 a vacuum pump 17 is provided. The device shown in Fig. 4 is characterized in that the strainer 3 is provided in an upper section of the separation tank 4, and a compartment above the strainer 3 is connected to the liquid storage tank 15. The device shown in Fig. 5 is characterized in that the strainer 3 is provided at a midway position inside the separation tank 4, one end of the suction hose 8 passes through an upper compartment above the strainer 3 and reaches a lower compartment, and the upper compartment is connected to the liquid storage tank 15.

0175193

By the use of the foregoing devices the separated solid bodies can surely be discharged without causing mingling with the separated liquid.

As is apparent from the foregoing description, the embodiment and modifications shown in Figs. 1 through 5 can separate and eliminate easily and surely solid bodies from the fluid containing solid bodies without need of disassembling of the device.

(Second embodiment)

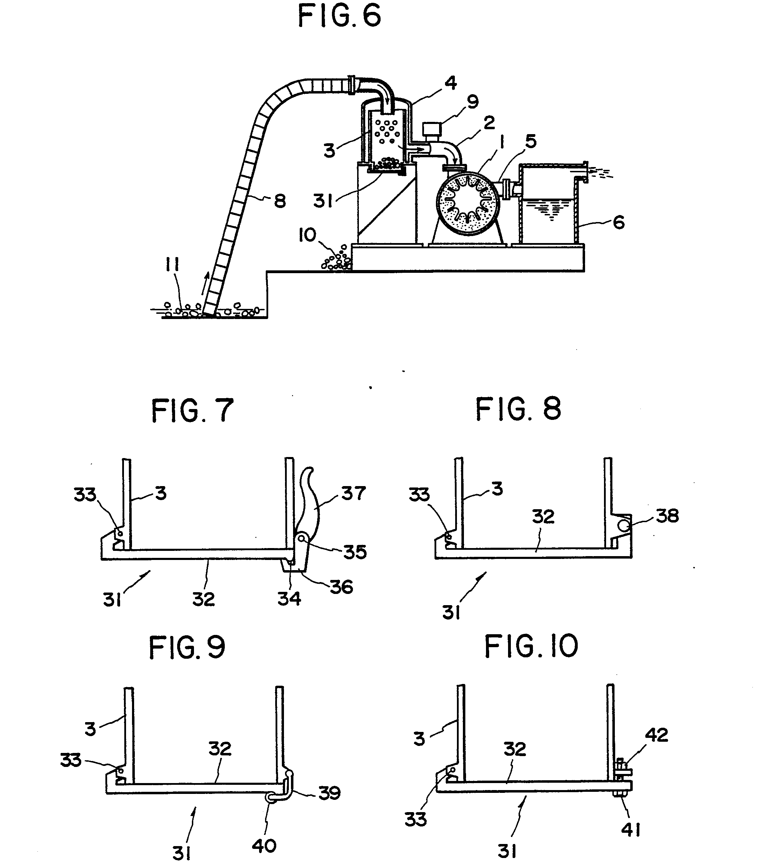

The second embodiment shown in Fig. 6 is a fluid processing device having substantially the same configuration as that of the device shown in Fig. 1, except that the open/close valve provided at a lower portion of the strainer 3 inside the separation tank 4 is replaced by a simple open/close valve 31. It is sometimes desirable that the simple open close/valve 31 can be opened and closed speedily by manual operation. Figs. 7 through 10 show concrete examples of the valve 31 meeting such a requirement.

The simple open/close valve 31 shown in Fig. 7 is characterized in that one end of a flat valve plate 32 is pivoted to a portion of a bottom side wall of the strainer 3 by a pivot pin 33 so that the valve plate 32 can swing vertically, the other end of the valve plate 32 has a lock segment 34, with respect to the lock segment 34 a lock hook 36 is attached swingably to the opposed portion of the bottom side wall of the strainer 3 by a pivot pin 35, and a control lever 37 is secured to the lock hook 36. By means of the foregoing configuration, the valve plate 32 can be opened and closed speedily and surely in response to operation of the control lever 37.

The simple open/close valve 31 shown in Fig. 8 is characterized in that the valve plate 32 is opened and closed by slipping of and on a pivot pin 38. The simple open/close valve 31 shown in Fig. 9 is characterized in that a lock roller 40 provided at the point of a lock hook 39 is locked on the lock segment 34. The simple open/close valve 31 shown in Fig. 10 is characterized in that the valve plate 32 is opened and closed by the use of connection bolt 41 and nut 42.

The simple open/close valve 31, however, should not be limited to those having such a configuration as above, and may be replaced by an electromagnetic valve, ordinary hand-operated open/close valve, etc.

Through repetition of the foregoing operation, the inside of the separation tank 1 is cleaned automatically and the solid bodies 10 etc. can be collected.

(Third embodiment)

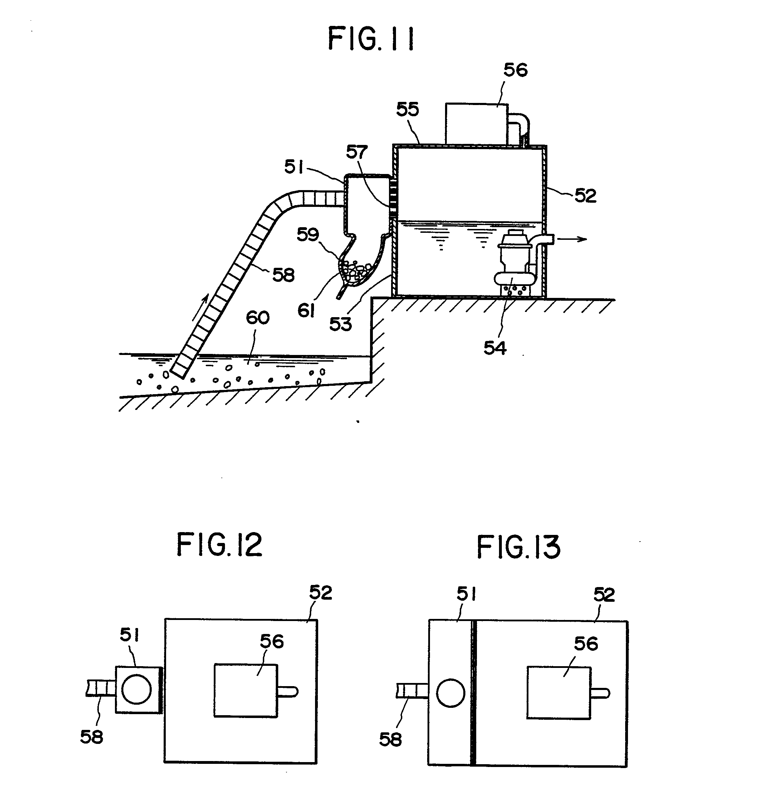

The third embodiment shown in Fig. 11 is characterized in that a separation tank 51 is attached to one side of a liquid storage tank 52 with a strainer 57 interposed therebetween, the liquid storage tank 52 is communicated with a suction unit 56, one end of a suction hose 58 whose other end is dipped in the substance containing solid bodies is communicated with the inside of the liquid storage tank 52, and an open/close valve 61 is attached to a lower portion of the separation tank 51, which opens and closes automatically depending upon the internal pressure of the separation tank 51. The separation tank 51 may take a width narrower than that of the liquid storage tank 52 as shown in Fig. 12, or have the same width as that of the tank 52 as shown in Fig. 13. The device shown in Fig. 11 includes further a discharge pump 54 for discharging liquid arranged in the liquid storage tank 52 and a suction unit 56 for evacuating the tank provided on its upper wall 55.

The transfer and separation work performed by the processing device of the foregoing configuration will now be described. As the suction unit 56 is put in operation, the internal pressure of the liquid storage tank 52 and of the separation tank 51 communicated through the strainer 57 with that tank 52 becomes negative, i.e. lower than the atmospheric pressure. As a result, the separation tank 51 is evacuated and a substance 60 containing solid bodies 59 is sucked into the separation tank 51 through the suction hose 58 and tends to flow into the liquid storage tank 52. However, because the strainer 57 is provided between the separation tank 51 and liquid storage tank 52, the solid bodies 59 remain within the separation tank 51, whereas liquid or gas passes through thru-holes of the strainer 57 and flows into the liquid storage tank 52.

0175193

Thereafter, the liquid is discharged outward by means of a discharge pump 54.

On the other hand, a simple open/close valve 61 is opened thereby causing the solid bodies 59 remaining within the separation tank 51 to be discharged outward spontaneously under the effect of gravity. In the above process, by introducing the air into the separation tank 51 or stopping the operation of the suction unit 56 the internal pressure of the separation tank 51 is made identical to the atmospheric pressure, whereby discharge of the solid bodies 59 from the inside of the separation tank 51 can be promoted.

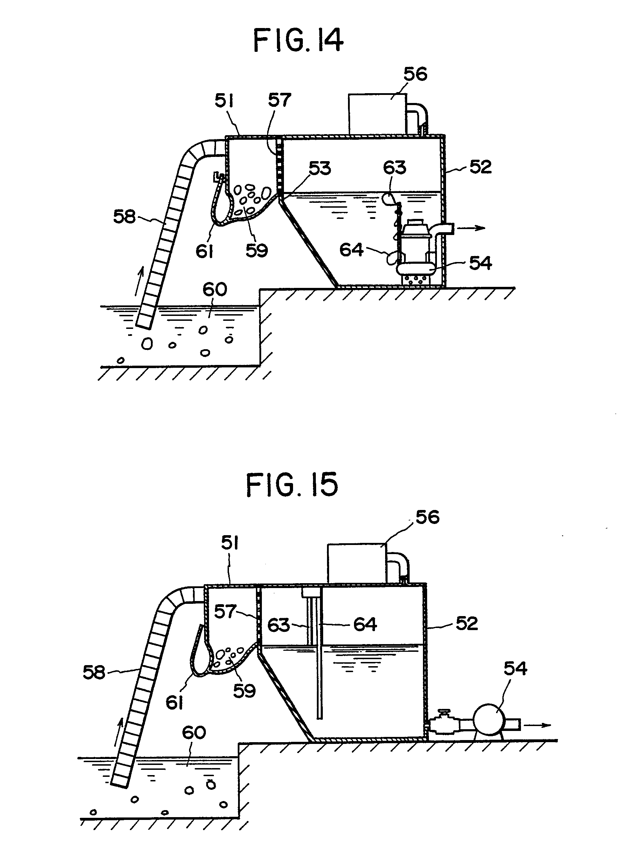

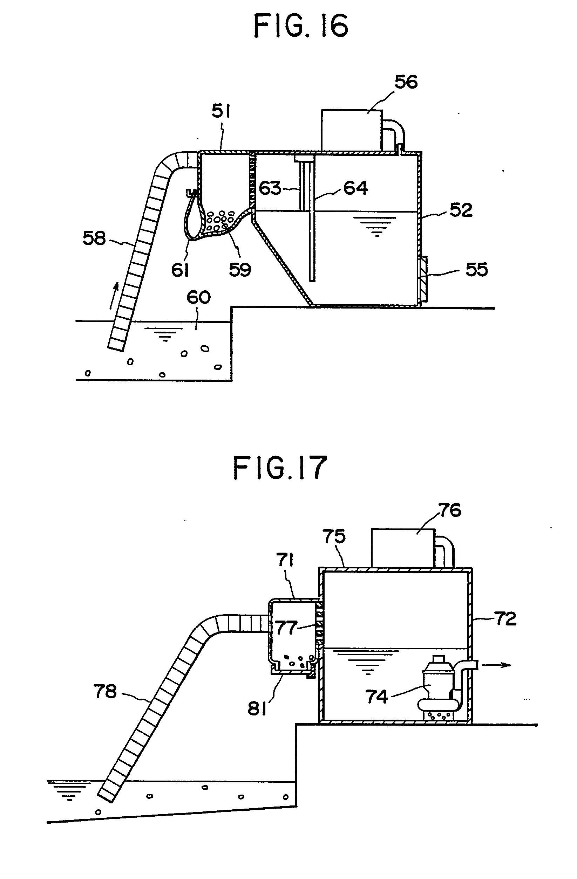

Figs. 14 through 16 show modifications of the device shown in Fig. 11. More clearly, the device shown in Fig. 14 is characterized in that the distal end of a hose body is hung temporarily on a side wall of the separation tank 51 by means of a hose hook to prevent unexpected opening of an open/close valve 61 formed by the hose body, and liquid level indicators 63, 64 in the form of a float switch are positioned inside the liquid storage tank 52 so that the operation of the discharge pump 54 can be controlled by the actuation of the liquid level indictors 63, 64. The device shown in Fig. 15 is characterized in that the liquid level indicators 63, 64 are of the float switch type, and the discharge pump 54 is positioned outside the liquid storage tank 52. The device shown in Fig. 16 is characterized in that the discharge pump 54 included in the other embodiments is omitted and therefor a drain port 55 is formed simply in the side wall of the liquid storage tank 52.

(Fourth embodiment)

The fourth embodiment shown in Fig. 17 is formed by substituting a simple open/close valve 81 similar to that included in the second embodiment for the automatic open/close valve 61 of the third embodiment.

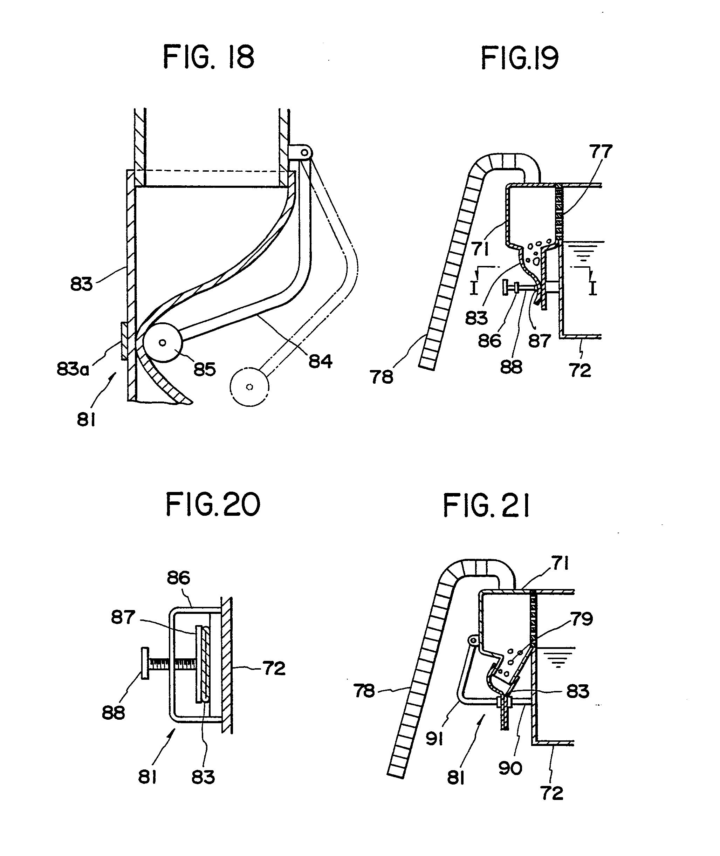

The simple open/close valve 81 shown in Fig. 18 is formed by a flexible cylinder body 83 coupled to an upper member and made of synthetic resin, for example. This cylinder body 83 is opened and closed by pushing one end thereof by means of a push roller 85 attached to the point of an L-shaped lever 84 which in turn is pivoted to a lower end of a separation tank 71, in cooperation with a fixed board 83a. The simple open/close valve 81 shown in Fig. 19 and Fig. 20 (which is a plane view in the direction of the arrow I-I in Fig. 19) is composed of a rigid frame body 86 provided around the flexible cylinder body 83 shown in Fig. 18, and a retractable rod 88 screwed in the frame body 86 which has at its point a push segment 87 for pressing the flexible cylinder body 83. The simple open/close valve 81 shown in Fig. 21 is composed of a rest 90 attached to a side wall of a liquid storage tank 72 and an L-shaped lever 91 whose base end is attached to a side wall of the separation tank 71, so that the flexible cylinder body 83 shown in Fig. 18 is pressed between the point of the lever 91 and rest 90. By urging the L-shaped lever 91 by means of a spring etc. the flexible cylinder body 83 can always be kept closed.

(Fifth embodiment)

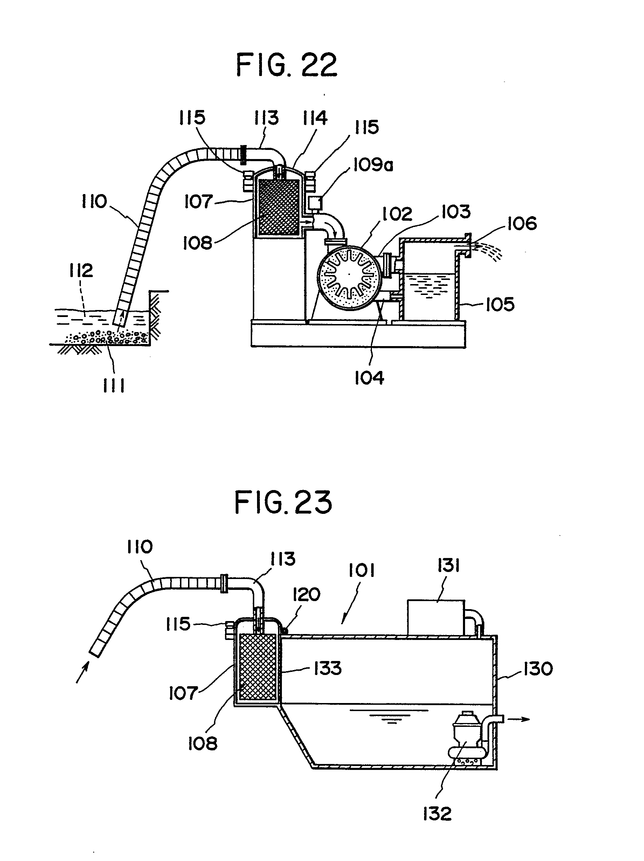

The fifth embodiment shown in Fig. 22 is characterized in that one end of a suction hose 110 whose other end is dipped in a substance 112 containing solid bodies 111 is communicated with the inside of a separation tank 107 having a strainer 108, the separation tank 107 is communicated through the strainer 108 with a suction unit 101, and an open/close lid 114 is attached detachably to an upper portion of the separation tank 107. To the open/close lid 114 which is attached detachably to the upper portion of the separation tank 107 by bolts 115, a connection pipe 113 is preferably connected integrally.

The transfer and separation work of the processing device of the foregoing configuration will now be described. As the suction unit 101 is put in operation, the internal pressure of the separation tank 107 becomes negative, i.e. lower than the atmospheric pressure. As a result, the substance 112 containing the solid bodies 111 etc. is sucked into the separation tank 107 through the suction hose 110 and tends to flow into a closed tank 105 through a water seal type vacuum pump 102. However, because the strainer 108 is provided between the separation tank 107 and water seal type vacuum pump 102, the solid bodies 111 remain within the separation tank 107, whereas liquid or gas passes through thru-holes of the strainer 108 and flows into the closed tank 105 through the water seal type vacuum pump 102. Thereafter, the inflow liquid is discharged outward through an outlet 106.

A vacuum release valve 109a then is actuated to remove the evacuated state from the separation tank 107, the open/close lid 114 is opened, and the solid bodies 111 remaining within the separation tank 107 are taken out through an upper portion of the tank.

Through repetition of the foregoing process the inside of the separation tank 107 is cleaned automatically and collection of the solid bodies 109 etc. can be achieved.

Figs. 23 through 25 show modifications of the liquid processing device shown in Fig. 22, which will now be described.

The device shown in Fig. 23 is characterized in that the suction unit 101 is composed of a liquid storage tank 130 with the separation tank 107 attached to its side wall, a vacuum pump 131 mounted on an upper wall of the liquid storage tank 130, and a liquid discharge pump 132 arranged in the liquid storage tank 130 for discharging the stored liquid outward. The liquid storage tank 130 has a strainer 133 formed on its connection wall with the separation tank 107, as are the other embodiments. By the foregoing configuration, the solid bodies can be eliminated two times and troubles of the suction unit 101 can be prevented from occurring.

Further, this embodiment is characterized in that the open/close lid 114 is pivotable about a pivot pin 120 so that it can open upward.

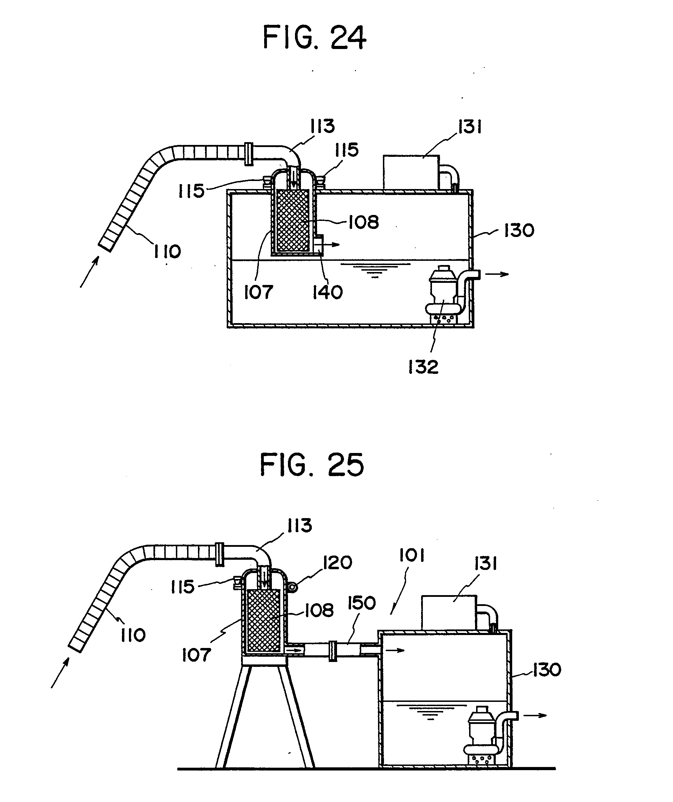

The device shown in Fig. 24 is characterized in that the separation tank 107 is arranged really inside the liquid storage tank 130 shown in Fig. 23, whereby an installation space can be saved. 140 is an outlet formed in a lower portion of the separation tank 107, through which the separated liquid flows into the liquid storage tank 130. The open/close lid 114 is, in the case of the device shown in Fig. 24, coupled detachably by means of bolts 115.

The device shown in Fig. 25 is characterized in that the separation tank 107 and liquid storage tank 130 shown in Fig. 23 are communicated with each other through a connection pipe 150, so that this configuration is effective if there is a long distance between the separation tank 107 and liquid storage tank 130.

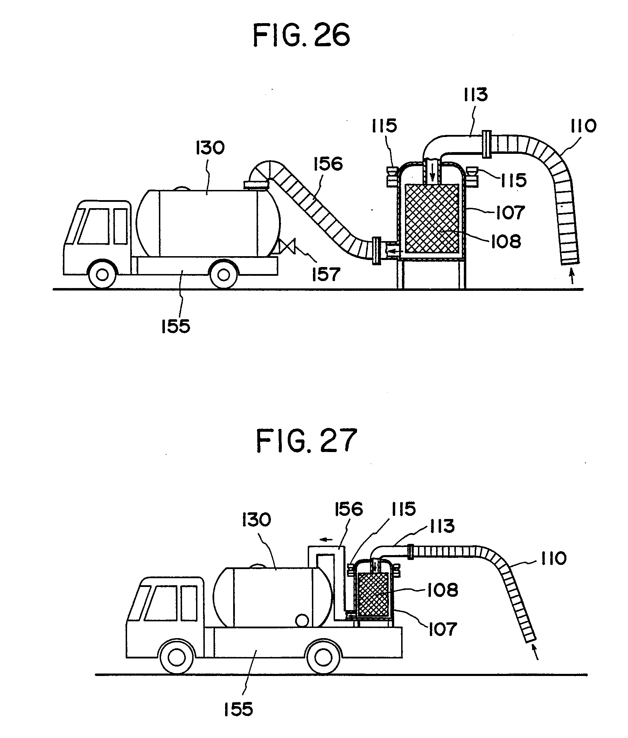

The device shown in Fig. 26 is a modification of the device shown in Fig. 25, and is characterized in that the liquid storage tank 130 is formed by a liquid storage tank of a vacuum car 155. 156 is a liquid transfer hose for connecting the separation tank 107 and liquid storage tank 130, and 157 is a liquid discharge valve.

The device shown in Fig. 27 is a modification of the device shown in Fig. 26, and is characterized in that the separation tank 107 is mounted integrally on the vacuum car 155. 158 is a liquid transfer pipe.

In the case of the devices shown in Figs. 26 and 27, the separated liquid can be transported to a desired, very-remote location.

(Sixth embodiment)

The sixth embodiment is characterized in that one end of a suction hose whose other end is dipped in a substance containing solid bodies is communicated with the inside of a separation tank, the separation tank is communicated through a separated-liquid transfer hose with a suction unit, and the separation tank is equipped with a solid discharge mechanism.

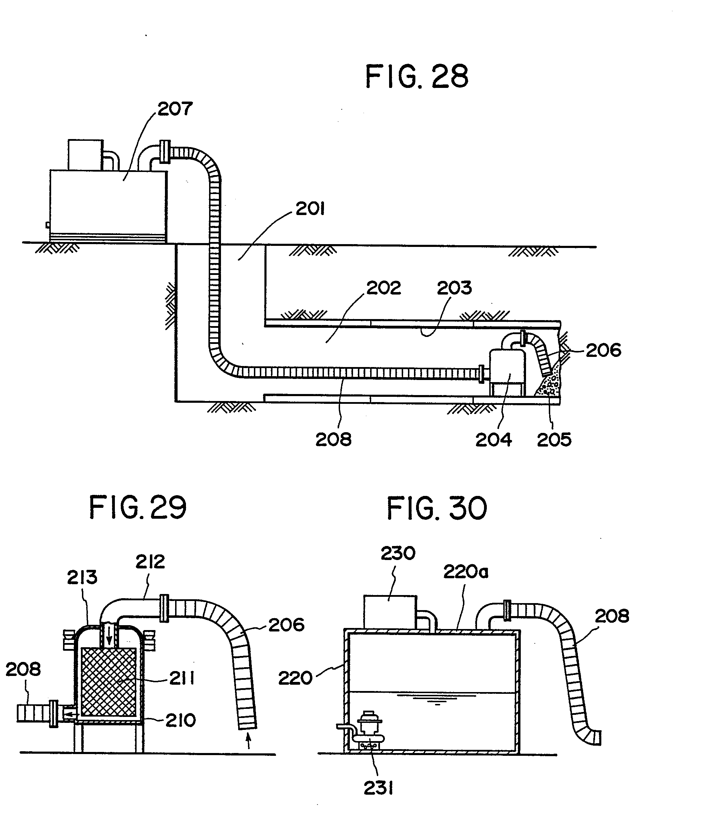

Fig. 28 shows schematically the device for processing liquid containing solid bodies according to the present invention. In this drawing, numerical 201 is a vertical hole, numerical 202 is a hole dug in the horizontal direction from the vertical hole 201, and numerical 203 is a dig pipe. Numerical 204 is a separation tank located at the front of the dug hole 202, which is connected to one end of a suction hose 206 whose other end is dipped in a substance 205 containing solid bodies. 207 is a suction unit situated on the earth which is connected through a separated-liquid transfer hose 208 to the separation tank 204. The internal configuration of the separation tank 204 of the above system is shown in Fig. 29.

In Fig. 29, numerical 210 is a separation tank body, and a cylindrical strainer 211 is arranged concentrically inside the separation tank body 210. Numerical 212 is a connection pipe going through an upper lid 213 of the separation tank body 210, whose one end is connected to the end of the suction hose 206 with the other end connected to the upper end of the strainer 211. Numerical 214 is an opening formed in a lower side wall of the separation tank body 210, which is connected to a proximal end portion of the separated-liquid transfer hose 108. In the foregoing configuration, the upper lid 213 is detachable from the separation tank body 210 together with the connection pipe 212, so that the solid bodies accumulating in the separation tank body 210 can be removed.

Fig. 30 shows the internal configuration of the suction unit 207. In this drawing, numerical 220 is a liquid storage tank which is connected at its upper wall 220a to the point of the separted-liquid transfer hose 208. Numerical 230 is a vacuum pump mounted on the upper wall 220a of the liquid storage tank 220, and the internal pressure of the liquid storage tank 220 can be diminished in response to actuation of the vacuum pump 230. 231 is a liquid discharge pump arranged in the liquid storage tank 220, which functions so as to discharge the separated liquid outward.

The transfer and separation work performed by the liquid processing device having the foregoing configuration will now be described. As the vacuum pump 230 of the suction unit 207 is put in operation, the internal pressure of the liquid storage tank 220 and of the separation tank 210 connected through the strainer 211 to that tank 220 becomes negative, i.e. lower than the atmospheric pressure. A substance 205 containing solid bodies is sucked through the suction hose 206 into the separation tank 204 and tends to flow into the liquid storage tank 220. However, because the strainer 211 is provided in the separation tank 204, the solid bodies remain within the separation tank 201, whereas liquid passes through thru-holes of the strainer 211 and flows into the liquid storage tank 220. Thereafter, the liquid is discharged outward by means of the liquid discharge pump 231 (or may be discharged manually or automatically by the use of a float switch etc.).

Following the above process, the upper lid 213 is opened, and the solid bodies remaining within the separation tank 210 are removed from the separation tank 210 (for example, by opening an open/close valve formed by a hose body).

Through repetition of the foregoing process, the inside of the separation tank 210 is cleaned automatically and the solid bodies etc. can be collected.

(Seventh embodiment)

This embodiment is characterized in that a separation tank provided with a strainer therein is pivotally mounted on a autotruck, and this separation tank has a lid which can be closed and opened to exhaust the solid body in the strainer, and further the separation tank can be tilted in the vertical direction by a tilting device interposed between the autotruck body, thereby the solid body is exhausted out of the separation tank in the opening condition of the lid.

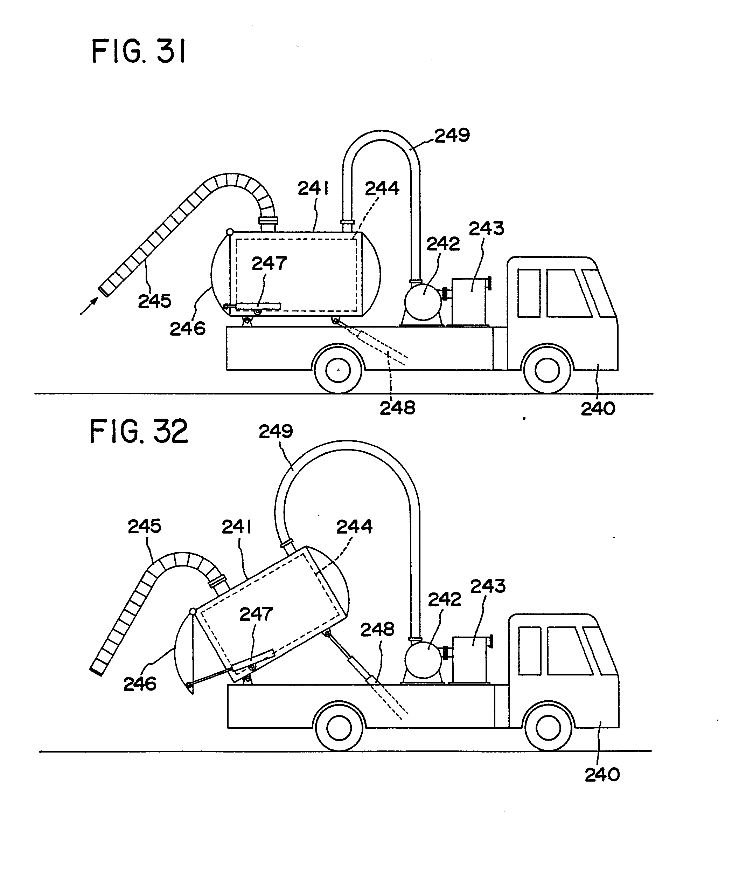

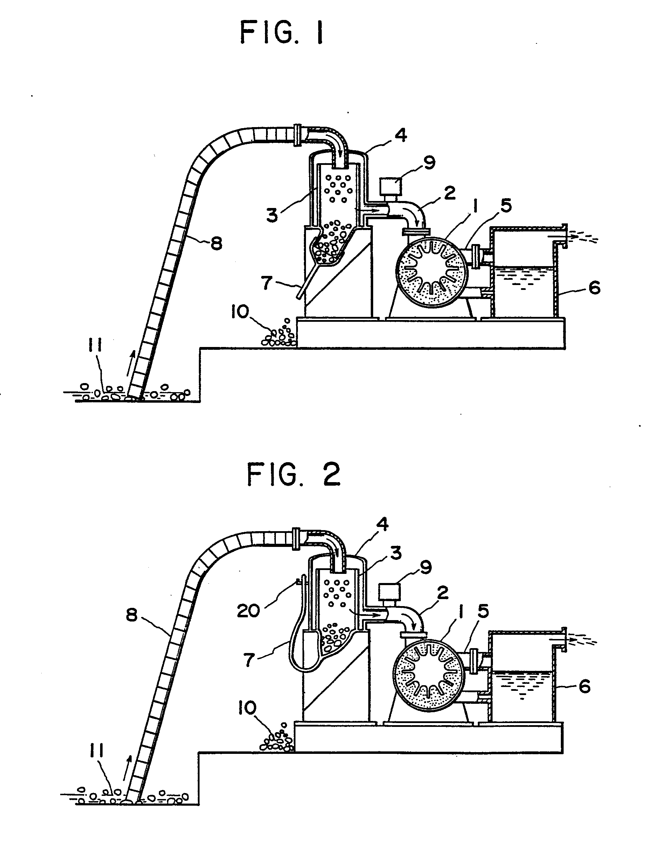

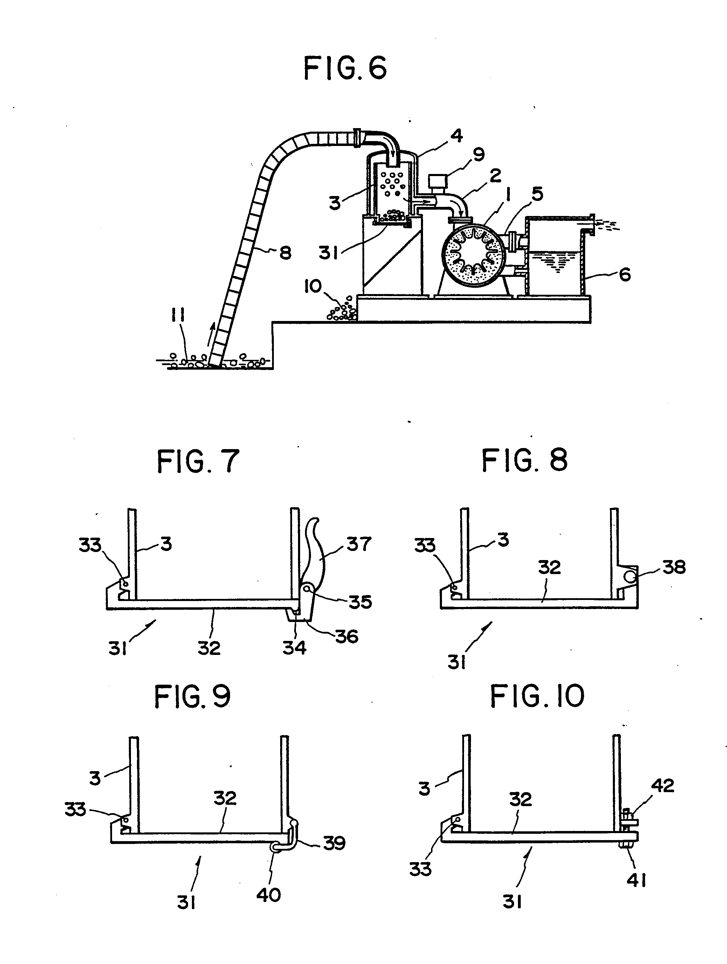

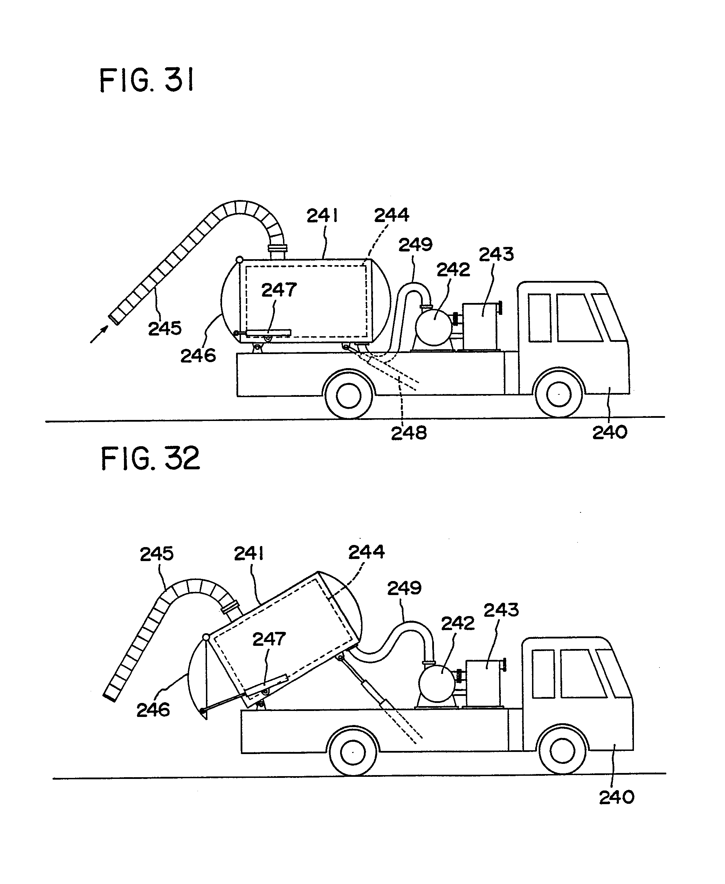

In Figs. 31 and 32, numerical 240 is an autotruck on which a separation tank 241, a water seal type vacuum pump 242, and a circulation water tank 243 are mounted. The separation tank 241 includes a cylindrical strainer 244 communicated with a suction hose 245 therein, and also is provided with a lid 246 at the rear end.

The upper portion of the lid 246 is pivotally secured to the body of the separation tank 241 and by the use of the hydraulic cylinder 247 the lid 245 moves in the direction of its opening position as shown in Fig. 32.

The separation tank 241 is pivotally secured to the body of the autotruck 240 at its lower portion so as to tilt in the vertical direction by the actuation of a hydraulic cylinder 248 interposed between the autotruck 240.

In the above construction, when the vacuum pump 242 is put into motion, the substance with liquid and solid body components is sucked up into the separation tank 241 through the suction hose 245. And only liquid component flows out the strainer 244 to the vacuum pump 242 through the flexible hose 249, while solid body component remains in the strainer 242.

And when the suction processing is over, the operator drives the autotruck 240 to a desired treatment field for muddy solid body, and subsequently handles for exhausting the solid body out of the separation tank 241.

This operation can be performed by actuating the hydraulic cylinder 248 to tilt the separation tank 241 in the vertical direction and simultaneously open the lid 246 by the use of the cylinder 247, thereby the solid body accumulated in the strainer 244 slips downwardly and exhausted.

By the foregoing configuration the present invention produces the effects that (a) solid bodies are separated previously from mud containing rolling stones, rocks, etc. and the pre-processed mud is transferred, so that the transfer work can be performed easily and speedily, (b) it is not required to install a bulky suction unit at the scene of labor, so that the transfer work can be performed even when a small area only is left in the spot, and (c) if the suction unit is made portable, transferred mud etc. can be transported effectively.

WHAT WE CLAIM IS:

1.  A device for processing fluid containing solid bodies comprising

a separation tank with a strainer arranged therein,

a fluid discharging suction unit communicated with one side of said strainer, and

a solid discharge mechanism communicated with the other side of said strainer.

0175193

FIG. 1

FIG. 2

# FIG. 3

# FIG. 4

# FIG. 5

FIG. 6

FIG. 7

FIG. 8

FIG. 9

FIG. 10

## FIG. 11

## FIG. 12

## FIG. 13

# FIG. 14

# FIG. 15

## FIG. 16

## FIG. 17

FIG. 18

FIG.19

FIG.20

FIG.21

0175193

## FIG. 22

## FIG. 23

0175193

## FIG. 24

## FIG. 25

FIG. 26

FIG. 27

# FIG. 28

# FIG. 29

# FIG. 30

FIG. 31

FIG. 32

## FIG. 1

## FIG. 2

FIG.6

FIG. 7

FIG. 8

FIG. 9

FIG. 10

## FIG. 31

## FIG. 32